# EUROPÄISCHE PATENTSCHRIFT

(11) **EP 1 344 957 B1**
(45) Veröffentlichungstag und Bekanntmachung des Hinweises auf die Patenterteilung: **05.10.2005**
(21) Anmeldenummer: 02026122.8
(22) Anmeldetag: 23.11.2002
(51) Int. Cl.: F16F 9/04, B60G 17/052, B60G 11/27

(54) **Pneumatische Federungs- und Dämpfungsvorrichtung**
Pneumatic suspension and damping device
Dispositif de suspension et d'amortissement pneumatique

(30) Priorität: 13.03.2002 EP 02005722
(43) Veröffentlichungstag der Anmeldung: 17.09.2003
(73) Patentinhaber: Continental Aktiengesellschaft, 30165 Hannover (DE)
(72) Erfinder: Behmenburg, Christof, Dr., 31867 Lauenau (DE); Job, Heinz, 31535 Neustadt (DE); Märtens, Michael, Dr., 60316 Frankfurt/Main (DE); Härtel, Volker, Dr., 82110 Germering (DE); Huber, Gerald, Dr., 30161 Hannover (DE); Kilsch, Armin, 30559 Hannover (DE); Engelke, Thomas, 30159 Hannover (DE); Kott, Burkhard, 30179 Hannover (DE)

(56) Entgegenhaltungen:
- DE-A- 2 406 835
- DE-A- 3 934 821
- DE-B- 1 132 013
- DE-C- 446 516
- US-A- 3 046 003
- US-A- 4 325 541
- US-A- 4 854 555
- US-A- 4 934 667
- PATENT ABSTRACTS OF JAPAN vol. 017, no. 548 (M-1490), 4. Oktober 1993 (1993-10-04) -& JP 05 149366 A (BRIDGESTONE CORP), 15. Juni 1993 (1993-06-15)

## Beschreibung

Gemäß dem Oberbegriff des Anspruchs 1 betrifft die Erfindung eine pneumatische Federungs- und Dämpfungsvorrichtung für Fahrzeuge enthaltend mindestens zwei mit Druckgas gefüllte, über einen Luftanschluss an eine Druckgasquelle anschließbare, hermetisch abgeschlossene und jeweils in ihrem Volumen veränderbare Luftfedern, welche jeweils eine von einem Roll- oder Faltenbalg gebildete bewegliche Wand enthalten und jeweils auf einer Abrollkontur abrollen und über ein in zwei Richtungen durchströmbares Drosselorgan in Verbindung stehen, und wobei die Luftfedern übereinander angeordnet sind und die Abrollkontur der ersten Luftfeder durch die zweite Luftfeder derart vorgegeben wird, dass die erste Luftfeder über der zweiten Luftfeder abrollt, und wobei ein oberer Deckel der ersten Luftfeder über ein Verbindungselement mit einem Abrollkolben der zweiten Luftfeder in Verbindung steht, und ein Deckel der zweiten Luftfeder mit einem Befestigungselement in Verbindung steht, wobei das Verbindungselement des oberen Deckels der ersten Luftfeder mit dem Abrollkolben der zweiten Luftfeder außerhalb der beiden Luftfedern verläuft.

Eine pneumatische Federungs- und Dämpfungsvorrichtung der eingangs genannten Art ist z.B. aus der EP 0516129 B1 (D1) bekannt. Die aus dieser Druckschrift bekannte Vorrichtung zur Dämpfung von Schwingungen ist zwischen einem fahrzeugfesten Aufhängungsglied und einem radfesten Aufhängungsglied betreibbar und verwendet ein elektrorheologisches Strömungsmittel als Dämpfungsmedium. Die Vorrichtung weist eine kürzere axiale Höhe als die vorbekannten Federungs- und Dämpfungsvorrichtungen auf. Die kürzere, axiale Höhe wird dadurch erreicht, dass zwei Strömungsmittelräume übereinander angeordnet sind, wobei die Abrollkontur der ersten, oberen Luftfeder von der Außenkontur der zweiten, unteren Luftfeder vorgegeben wird. Die Strömungsmittelräume sind jeweils von elastischen Wänden unter Ausbildung von gleich orientierten Rollfalten dicht umschlossen und stehen über eine in beiden Richtungen durchströmbare Drossel in Verbindung. Ein oberer Deckel des ersten, oberen Strömungsmittelraumes steht mit einem Abrollkolben des zweiten, unteren Strömungsmittelraumes über eine Kolbenstange des Stoßdämpfers in Verbindung. An dem Abrollkolben des zweiten, unteren Strömungsmittelraumes ist ein Stoßfänger angebracht, welcher sich bei fast vollständiger Einfederung der Federungs- und Dämpfungsvorrichtung an einem radfesten Gehäuse abstützt. Der obere fahrzeugkarosseriefeste Deckel des ersten, oberen Strömungsmittelraumes weist ein volumenkompensierendes Glied auf, welches sich bei fast vollständiger Einfederung der Federungs- und Dämpfungsvorrichtung am Deckel des zweiten, unteren Strömungsmittelraumes abstützt. Der Deckel des zweiten, unteren Strömungsmittelraumes steht über ein mit Aussparungen versehenes Gehäuse mit einer radfesten Befestigungshalterung eines Fahrzeuges in Verbindung. Die Verschwenkbarkeit der Federungs- und Dämpfungsvorrichtung der Druckschrift D1 des fahrzeugkarosseriefesten Endes gegenüber dem radfesten Ende dieser ist relativ gering, da das Schwenklager der Federungs- und Dämpfungsvorrichtung aus Festigkeitsgründen nicht beliebig weich und elastisch ausgeführt werden kann. Durch die weit auseinanderliegenden Führungselemente und damit sehr lange Führung der Kolbenstange des Stoßdämpfers der Federungs- und Dämpfungsvorrichtung, baut diese relativ lang. Ausserdem entsteht zwischen diesen Führungselementen und der Kolbenstange eine unerwünschte Reibung, insbesondere wenn zusätzliche Querkräfte wirken.

Weiterhin beschreibt die DE-OS 24 06 835 (D2) als nächstliegender Stand der Technik eine Federungs- und Dämpfungsvorrichtung mit Luftdämpfung. Bei der aus dieser Druckschrift bekannten Federungs- und Dämpfungsvorrichtung stehen ein Federungsraum, der sich mittels eines Rollbalges beim Einfedem verkleinert und beim Ausfedem vergrössert, und ein Dämpferraum, welcher mittels eines Rollbalges in seinem Volumen veränderlich ist, über ein in beiden Richtungen durchströmbares Drosselorgan in Verbindung. Das in seinem Querschnitt H-fömige Gehäuse der Federungs- und Dämpfungsvorrichtung ist fest mit dem Fahrzeugrahmen verbunden. Die jeweiligen Abrollkolben der Federungs- und Dämpfungsräume stützen sich gegen die jeweiligen oberen und/oder unteren Querlenker der Radaufhängung ab. Diese Ausführung einer Federungs- und Dämpfungsvorrichtung mit dem im Querschnitt H-förmigen Gehäuse führt zu einer aufwendigen Konstruktion der Radaufhängung, insbesondere der fahrzeugaufbaufesten Verbindung, und zu einem erhöhten Bauraumbedarf. Die Federungs- und Dämpfungsvorrichtung kann daher herkömmliche Federungs- und Dämpfungsvorrichtungen, bestehend zum Beispiel aus einer Luftfeder und einem hydraulischen Stoßdämpfer, welche üblicherweise im oberen Bereich fest am Fahrzeugaufbau und im unteren Bereich mit einer Befestigungsvorrichtung an einer Radaufhängung befestigt sind, ohne besondere Anpassungen am Fahrzeug bezüglich der Radaufhängung, der fahrzeugaufbaufesten Anbindung und des Bauraumes nicht ersetzen.

Aufgabe der Erfindung ist es, eine für ein Fahrzeug geeignete Vorrichtung zu schaffen, deren Bauraum gering ist und die ohne konstruktiven Mehraufwand in den Bauraum von herkömmlichen Federungs- und Dämpfungsvorrichtungen eingebaut werden kann und keine - insbesondere trockene - Reibung aufweist, welche zu akustischen Problemen führen kann.

Diese Aufgabe wird erfindungsgemäß durch die kennzeichnenden Merkmale des Anspruchs 1 gelöst.

Die erste (obere) Luftfeder wird zum Einbau der Federungs- und Dämpfungsvorrichtung in ein Fahrzeug, zum Beispiel über einen oberen Deckel, mit der Karosserie des Fahrzeuges verbunden, wohingegen die zweite (untere) Luftfeder über einen Deckel mit einem Befestigungselement in Verbindung steht und mit der Radaufhängung des Fahrzeuges verbunden wird. Wie dies im Einzelnen erfolgt, wird weiter unten ausgeführt. Beim Abrollen der ersten Luftfeder über der zweiten Luftfeder müssen sich die beiden Luftfedern nicht zwangsweise berühren. Die zweite Luftfeder kann bei einem Abrollen der ersten Luftfeder über der zweiten Luftfeder in dieser ersten Luftfeder quasi eintauchen, ohne dass sich die beiden Luftfedern berühren. Der mit der Erfindung erzielte Vorteil ist insbesondere darin zu sehen, dass die erfindungsgemäße Anordnung der Luftfedern sehr kurz und kompakt gebaut werden kann und keinerlei Reibung aufweist, weil auf einen in herkömmlichen Federungs- und Dämpfungsvorrichtungen üblichen Stoßdämpfer verzichtet werden kann. Vorteilhafterweise können die Befestigungspunkte des oberen Deckels und des Befestigungselements so gestaltet sein, dass eine herkömmliche Federungs- und Dämpfungsvorrichtung durch die erfindungsgemäße Federungs- und Dämpfungsvorrichtung ohne große konstruktive Änderungen an der Radaufhängung oder dem Fahrzeugaufbau ersetzt werden kann. Ein weiterer Vorteil der Erfindung ist, dass keine unerwünschte Reibung insbesondere durch Querkräfte erzeugt wird, was sich akustisch positiv bemerkbar macht. Die Federungs- und Dämpfungseigenschaften der erfindungsgemäßen Federungs- und Dämpfungsvorrichtung sind somit frei von unerwünschten Reibungseffekten.

Gemäß der Erfindung ist vorgesehen, dass eine (untere) Glocke die Außenführungskontur des unteren Rollbalges der zweiten Luftfeder und die Abrollkontur des oberen Rollbalges der ersten Luftfeder bildet. Der Komfort einer pneumatischen Federungs- und Dämpfungsvorrichtung hängt im wesentlichen von der Abrollkontur und der Dicke eines Rollbalges ab. Ein Vorteil dieser Merkmale ist, dass die Abrollkontur des oberen Rollbalges der ersten Luftfeder durch die äußere Formgebung der unteren Glocke frei gewählt und somit komfortoptimiert eingestellt werden kann. Ein weiterer Vorteil ist, dass die Außenführungskontur des unteren Rollbalges der zweiten Luftfeder eine Reduzierung der Dicke dieses unteren Rollbalges auf ein für den Komfort der Federungs- und Dämpfungsvorrichtung ideales Maß erlaubt. Vorteilhafterweise kann die Kontur der inneren Oberfläche der unteren Glocke (Außenführungskontur des unteren Rollbalges der zweiten Luftfeder) unabhängig von der äußeren Formgebung der unteren Glocke (Abrollkontur des oberen Rollbalges der ersten Luftfeder) frei gewählt werden und somit optimal auf den Komfort der Federungs- und Dämpfungsvorrichtung abgestimmt werden.

Gemäß einer Weiterbildung der Erfindung nach Anspruch 3 ist vorgesehen, dass die untere Glocke mit dem Befestigungselement in Verbindung steht. Dieses Befestigungselement ermöglicht die Anbindung der erfindungsgemäßen Federungs- und Dämpfungsvorrichtung an eine herkömmliche Radaufhängung eines Fahrzeuges. Damit sind keine aufwendigen konstruktiven Änderungen an der Radaufhängung eines Fahrzeuges für den Einbau der erfindungsgemäßen Federungs- und Dämpfungsvorrichtung notwendig.

Gemäß einer Weiterbildung der Erfindung nach Anspruch 4 ist vorgesehen, dass eine obere Glocke eine Außenführungskontur des oberen Rollbalges der ersten Luftfeder darstellt. Der Vorteil dieser Weiterbildung ist darin zu sehen, dass die Außenführungskontur des oberen Rollbalges der ersten Luftfeder eine Reduzierung der Dicke dieses oberen Rollbalges auf ein für den Komfort der Federungs- und Dämpfungsvorrichtung ideales Maß und eine freie komfortoptimierte Formgebung dieser Außenführungskontur erlaubt.

Gemäß einer Weiterbildung der Erfindung nach Anspruch 5 ist vorgesehen, dass ein unterer Abrollkolben der zweiten Luftfeder (der die Abrollkontur dieser vorgibt) mit der oberen Glocke in Verbindung steht. Durch diese Anordnung kann, im Vergleich zu einer herkömmlichen Federungs- und Dämpfungsvorrichtung, auf einen Stoßdämpfer, welcher herkömmlicherweise zur Aufnahme und Befestigung des Abrollkolbens einer Luftfeder verwendet wird, und die Verbindung von dem oberen Deckel zum unteren Abrollkolben der zweiten Luftfeder herstellt, verzichtet werden.
Ein weiterer Vorteil der Weiterbildung ist, dass beide Luftfedern in eine Richtung orientiert sein können, was Bauraum spart.

Gemäß einer Weiterbildung der Erfindung nach Anspruch 6 ist vorgesehen, dass der obere Deckel der ersten Luftfeder und die obere Glocke einteilig ausgeführt sind. Die Reduzierung der Anzahl von Bauteilen ermöglicht eine einfache und kostengünstige Konstruktion der erfindungsgemäßen Federungs- und Dämpfungsvorrichtung. Vorteilhafterweise kann bei dieser Weiterbildung der Erfindung der obere Klemmring des oberen Rollbalgendes der ersten Luftfeder innerhalb der ersten Luftfeder liegen und das obere Rollbalgende an die Innenfläche des Deckels bzw. der Glocke pressen und dort abdichten. Der obere Klemmring der ersten Luftfeder besitzt damit eine von dem Luftdruck der Luftfeder unterstützte Dichtwirkung.

Gemäß einer Weiterbildung der Erfindung nach Anspruch 7 ist vorgesehen, dass die Differenzfläche der Abrollkonturen der beiden Rollbälge als wirksame Fläche klein ist. Eine kleine wirksame Fläche der Abrollkonturen erlaubt die Verwendung von relativ hohem Luftdruck in den Luftfedern, wodurch zum einen eine hohe Traglast und zum anderen in Verbindung mit einem entsprechenden Drosselorgan eine gute Achsdämpfung erreicht wird.

Gemäß einer Weiterbildung der Erfindung nach Anspruch 8 ist vorgesehen, dass der untere Abrollkolben zweiteilig ausgeführt ist und eine Abstimmschale zur Ausbildung der Abrollkontur des unteren Rollbalges enthält. Mit dieser Abstimmschale kann die Abrollkontur des unteren Rollbalges der zweiten Luftfeder auf einfache Art und Weise und ohne weiteren konstruktiven oder fertigungstechnischen Aufwand den jeweiligen Anforderungen an Federung und Dämpfung von unterschiedlichen Fahrzeugtypen mit unterschiedlichen Traglasten angepasst werden.

Gemäß einer Weiterbildung der Erfindung nach Anspruch 9 ist vorgesehen, dass die erste Luftfeder gegenüber der zweiten Luftfeder schwenkbar ist. Eine Verschwenkung der beiden Luftfedern gegeneinander bis zu einem vorbestimmten Winkel α (Alpha) hat keinen nennenswerten Einfluß auf die Funktion der Federung- und Dämpfungsvorrichtung und erzeugt keine zusätzliche Reibung oder Querkräfte, wie dies bei herkömmlichen Federungs- und Dämpfungsvorrichtungen mit Stoßdämpfer und Kolbenstange der Fall ist. Dies hat akustische Vorteile. Der relative weit oben liegende Drehpunkt der Verschwenkung im Zentrum des Deckels der zweiten unteren Luftfeder und damit lange Hebelarm in Bezug auf das untere Befestigungselement lässt eine Verschwenkung der beiden Luftfedern gegeneinander in einem weiten Bereich zu. Ein weiterer Vorteil der Weiterbildung der Erfindung ist, dass kein zusätzliches Schwenklager notwendig ist, da dieses bereits von der vorhandenen Rollfalte der oberen Luftfeder gebildet wird.

Gemäß einer Weiterbildung der Erfindung nach Anspruch 10 ist vorgesehen, dass die Rollbälge der beiden Luftfedern einstückig, insbesondere aus einem Schlauchrollbalg, ausgeführt sind. Mit einem einteiligen Schlauchrollbalg kann der obere Klemmring am Deckel der zweiten (unteren) Luftfeder oder der untere Klemmring der ersten (oberen) Luftfeder am Deckel oder der unteren Glocke der zweiten (unteren) Luftfeder eingespart werden und Kosten reduziert werden. Vorteilhafterweise kann auf eine separate Abdichtung, z.B. durch einen O-Ring, zwischen dem Deckel oder dem oberen Klemmring der zweiten (unteren) Luftfeder und der unteren Glocke verzichtet werden. Der Verzicht auf den O-Ring spart Kosten und Fertigungsaufwand ein und verbessert die Abdichtung der Federungs- und Dämpfungsvorrichtung nach außen.

Gemäß einer Weiterbildung der Erfindung nach Anspruch 11 ist vorgesehen, dass das Drosselorgan einen Drosselquerschnitt aufweist, welcher hinsichtlich einer optimalen Dämpfung der Fahrzeugaufbaueigenfrequenz vorzugsweise im Bereich von 0,2 Hz bis 4 Hz gewählt wird. Der Vorteil der Weiterbildung ist darin zu sehen, dass die Fahrzeugaufbaueigenfrequenz gezielt gedämpft werden kann, ohne die Federungs- und Dämpfungsvorrichtung insbesondere bei höheren Frequenzen unzulässig zu verhärten.

Gemäß einer Weiterbildung der Erfindung nach Anspruch 12 ist vorgesehen, dass eine Verbindungsleitung zwischen den beiden Luftfedern vorhanden ist. Der Vorteil der Weiterbildung ist, dass die Federungs- und Dämpfungsvorrichtung auf die Dämpfung einer weiteren Frequenz abgestimmt werden kann. Mit der zusätzlichen Verbindungsleitung ist es auch möglich, die Dämpfungsarbeit insgesamt zu erhöhen. Die Dämpfungsarbeit ist ein Maß für die Güte der Dämpfungseigenschaften der Federungs- und Dämpfungsvorrichtung. Je größer die Dämpfungsarbeit ist, desto besser dämpft die Federungs- und Dämpfungsvorrichtung.

Gemäß einer Weiterbildung der Erfindung nach Anspruch 13 ist vorgesehen, dass das Drosselorgan und die Verbindungsleitung zwischen den beiden Luftfedern parallel geschaltet sind. Der Vorteil der Weiterbildung ist, dass die Federungs- und Dämpfungsvorrichtung auf die Dämpfung einer weiteren Frequenz abgestimmt werden kann. Das Drosselorgan und die Verbindungsleitung können an unterschiedlichen Stellen der Federungs- und Dämpfungsvorrichtung optimal an die dortigen Einbauverhältnisse angepasst werden.

Gemäß einer Weiterbildung der Erfindung nach Anspruch 14 ist vorgesehen, dass das Drosselorgan und die Verbindungsleitung zwischen den beiden Luftfedern in Reihe geschaltet sind. Der Vorteil der Weiterbildung ist darin zu sehen, dass ein einfacher Aufbau mit nur einer Verbindung geschaffen wird. Die Herstellungskosten lassen sich aufgrund der Verwendung gleicher Bauteile beider Verbindungen reduzieren.

Gemäß einer Weiterbildung der Erfindung nach Anspruch 15 ist vorgesehen, dass das Drosselorgan an einem Ende der Verbindungsleitung zwischen den beiden Luftfedern entweder an oder in dem oberen Deckel bzw. der oberen Glocke oder an oder in dem unteren Abrollkolben angeordnet ist. Damit ist das Drosselorgan leicht von außen zugänglich und kann gegebenenfalls gewechselt werden, um die Federungs- und Dämpfungsvorrichtung an unterschiedliche Fahrzeugtypen anzupassen. Ein weiterer Vorteil der Weiterbildung ist, dass das (Resonanz-)Schwingungsverhalten der Verbindungsleitung durch das Drosselorgan nicht beeinflusst wird.

Gemäß einer Weiterbildung der Erfindung nach Anspruch 16 ist vorgesehen, dass das Drosselorgan innerhalb - vorzugsweise in der Mitte - der Verbindungsleitung zwischen den beiden Luftfedern angeordnet ist. Der Vorteil der Weiterbildung ist darin zu sehen, dass die Verbindungsleitung zwischen den beiden Luftfedern auf die Dämpfung von zwei bestimmten Frequenzen eingestellt werden kann. Somit lassen sich durch die Federungs- und Dämpfungsvorrichtung gezielt drei bestimmte Frequenzen dämpfen. Die Länge der Verbindungsleitung der beiden Luftfedern kann sich in diesem Fall verdoppeln, so dass quasi zwei Verbindungsleitungen, durch ein Drosselorgan getrennt, in Reihe geschaltet sind.

Gemäß einer Weiterbildung der Erfindung nach Anspruch 17 ist vorgesehen, dass die Verbindungsleitung zwischen den beiden Luftfedern außerhalb der beiden Luftfedern verläuft. Der Vorteil der Weiterbildung ist darin zu sehen, dass die Verbindung einfach herzustellen ist. Ein weiterer Vorteil ist, dass die Verbindung von außen zugänglich ist, was eine Integration von weiteren Bauteilen an oder in die Verbindung enorm erleichtert. Ein weiterer Vorteil ist, dass außerhalb der beiden Luftfedern, insbesondere bei einer langen und im Querschnitt großen Verbindung, ein großer Bauraum zur Verfügung steht.

Gemäß einer Weiterbildung der Erfindung nach Anspruch 18 ist vorgesehen, dass die Verbindungsleitung zwischen den beiden Luftfedern an oder in der oberen Glocke und/oder an oder in dem unteren Abrollkolben verläuft. Der Vorteil der Weiterbildung ist darin zu sehen, dass die Verbindung einfach herzustellen ist. Die Verbindung kann in Form einer Standard-Schlauchleitung ausgeführt sein. Oder die Verbindung wird durch einen Kanal innerhalb der oberen Glocke und des unteren Abrollkolbens gebildet.

Gemäß einer Weiterbildung der Erfindung nach Anspruch 19 ist vorgesehen, dass die Verbindungsleitung zwischen den beiden Luftfedern mit einer Schalteinheit schaltbar ist, wobei vorzugsweise ein Magnetventil verwendet wird. Der Vorteil der Weiterbildung ist darin zu sehen, dass die Federungs- und Dämpfungsvorrichtung mit der Schaltbarkeit der Verbindungsleitung zwei unterschiedliche Federungs- und Dämpfungscharakteristika aufweist, wie dies zum Beispiel bei einer ersten, weichen und Komfort orientierten Charakteristik und einer zweiten, harten Sport-Charakteristik erforderlich ist.

Gemäß einer Weiterbildung der Erfindung nach Anspruch 20 ist vorgesehen, dass die Verbindungsleitung zwischen den beiden Luftfedern mit einem vorzugsweise elektrisch betätigbaren Proportionalventil vorzugsweise stufenlos regelbar ist. Der Vorteil der Weiterbildung ist, dass die Federungs- und Dämpfungscharakteristik der Federungs- und Dämpfungsvorrrichtung stufenlos an die jeweilige gewünschte Fahrweise angepasst werden kann. Damit lassen sich zu jedem Zeitpunkt insbesondere die Dämpfungseigenschaften der Vorrichtung optimal auf den Fahrzustand des Kraftfahrzeuges einstellen.

Gemäß einer Weiterbildung der Erfindung nach Anspruch 21 ist vorgesehen, dass die Schalteinheit der Verbindungsleitung zwischen den beiden Luftfedern an oder in der oberen Glocke angeordnet ist. Der Vorteil der Weiterbildung der Erfindung ist darin zu sehen, dass die Schalteinheit von außen gut zugänglich ist. Es können kostengünstige Standardbauteile für die Schalteinheit verwendet werden. Weiterhin sind die Steuer- und Stromversorgungsleitungen der Schalteinheit gut zugänglich.

Gemäß einer Weiterbildung der Erfindung nach Anspruch 22 ist vorgesehen, dass die Schalteinheit der Verbindungsleitung zwischen den beiden Luftfedern an oder in dem unteren Abrollkolben angeordnet ist. Der Vorteil der Weiterbildung der Erfindung ist darin zu sehen, dass die Schalteinheit von außen gut zugänglich ist. Es können kostengünstige Standardbauteile für die Schalteinheit verwendet werden. Weiterhin sind die Steuer- und Stromversorgungsleitungen der Schalteinheit gut zugänglich.

Gemäß einer Weiterbildung der Erfindung nach Anspruch 23 ist vorgesehen, dass die Verbindungsleitung eine im Vergleich zum Drosselquerschnitt des Drosselorgans große Querschnittfläche von vorzugsweise mehr als 10 mm² aufweist. Der Vorteil der Weiterbildung der Erfindung ist darin zu sehen, dass die Federungs- und Dämpfungvorrichtung mit einer großen Querschnittfläche der Verbindungsleitung Fahrzeugachsschwingungen in einem Frequenzbereich von oberhalb ca. 10 Hz dämpfen kann.

Gemäß einer Weiterbildung der Erfindung nach Anspruch 24 ist vorgesehen, dass die Länge der Verbindungsleitung mindestens dem fünffachen Wert der Querschnittfläche der Verbindungsleitung entspricht. Der Vorteil der Weiterbildung der Erfindung ist darin zu sehen, dass damit gezielt die Resonanzschwingungen im Bereich der Schwingungen der Fahrzeugachse insbesondere in einem höheren Frequenzbereich von mehr als 10 Hz gedämpft werden können. Je kleiner die Länge der Verbindungsleitung und je größer die Querschnittfläche der Verbindungsleitung gewählt wird, desto höhere Frequenzen können gedämpft werden.

Gemäß einer Weiterbildung der Erfindung nach Anspruch 25 ist vorgesehen, dass der Querschnitt und die Länge der Verbindungsleitung zwischen den beiden Luftfedern so gewählt werden, dass eine gute Dämpfung der Achsschwingungen -vorzugsweise im Frequenzbereich von 10 Hz bis 40 Hz- erzielt wird. Der Vorteil der Weiterbildung der Erfindung ist, dass mit der Verbindungsleitung zwischen den beiden Luftfedern gezielt eine bestimmte Frequenz - insbesondere eine Resonanzfrequenz - gedämpft werden kann. Der Querschnitt und die Länge werden so aufeinander abgestimmt, dass die Luftsäule innerhalb der Verbindungsleitung beim Betrieb der Federung- und Dämpfungsvorrichtung in Schwingungen versetzt wird und diese Schwingungen der Luftsäule die Dämpfung der bestimmten Frequenz stark erhöhen.

Gemäß einer Weiterbildung der Erfindung nach Anspruch 26 ist vorgesehen, dass die Querschnittfläche der Verbindungsleitung zwischen den beiden Luftfedern im Bereich von 3 mm² bis 500 mm² und die Länge der Verbindungsleitung zwischen den beiden Luftfedern im Bereich von 50 mm bis 1000 mm gewählt wird. Der Vorteil der Weiterbildung der Erfindung ist darin zu sehen, dass innerhalb dieses Querschnittflächen-Längen-Bereiches der Verbindungsleitung zwischen den beiden Luftfedern eine besonders gute Dämpfung der Fahrzeugachseigenfrequenzen möglich ist, ohne die Federungseigenschaften der Vorrichtung bei höheren Frequenzen zu verhärten und damit zu verschlechtern.

Ausführungsbeispiele und weitere Vorteile der Erfindung werden im Zusammenhang mit den nachstehenden Figuren erläutert, darin zeigen:
- Fig. 1: Eine pneumatische Federungs- und Dämpfungsvorrichtung,
- Fig. 2: Eine pneumatische Federungs- und Dämpfungsvorrichtung und Wirkflächen dieser,
- Fig. 3 bis 6: Eine pneumatische Federungs- und Dämpfungsvorrichtung.

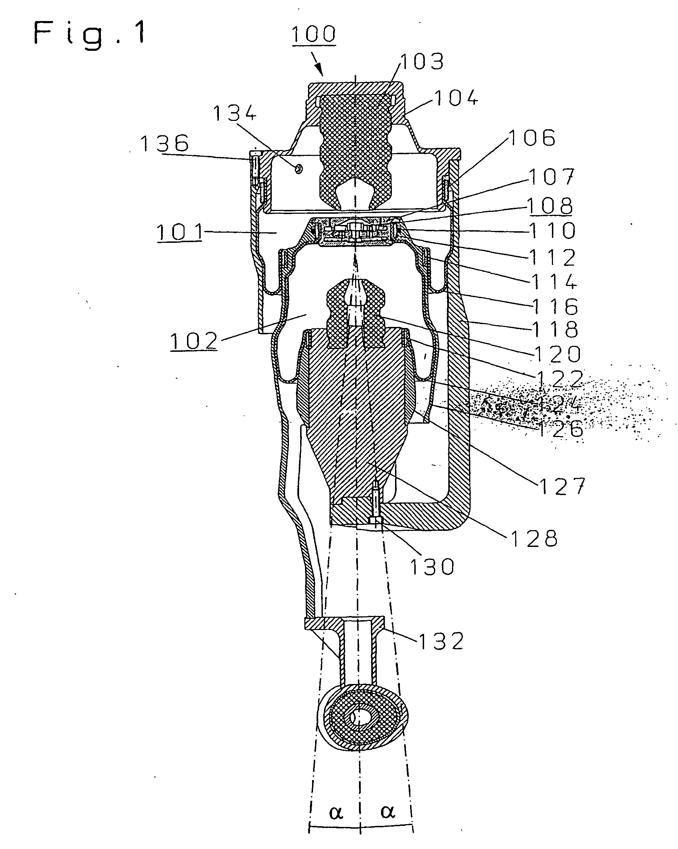

Figur 1 zeigt eine Federungs- und Dämpfungsvorrichtung mit einer ersten Luftfeder 101 und einer zweiten Luftfeder 102. Die erste Luftfeder 101 ist über einen Rollbalg 116 hermetisch dicht nach außen abgeschlossen und rollt unter Ausbildung einer Abrollfalte über der zweiten Luftfeder 102, welche ebenfalls über einen Rollbalg 124 hermetisch dicht nach außen abgeschlossen ist, ab. Die beiden Luftfedern 101, 102 stehen über ein in beiden Richtungen durchströmbares Drosselorgan 108 in Verbindung. Das Drosselorgan 108 weist eine oder mehrere Durchgangsbohrungen mit einem oder mehreren Rückschlagventilen je Durchströmungsrichtung auf und bestimmt damit die mögliche Dämpfungsarbeit der Federungs- und Dämpfungsvorrichtung 100.

Das obere Ende des Rollbalges 116 der ersten Luftfeder 101 ist über einen Klemmring 106 mit einem oberen Deckel 104, welcher eine Zusatzfeder 103 und einen Luftanschluss 134 enthält, dicht verbunden. Die Zusatzfeder 103 stützt sich bei fast vollständiger Einfederung der ersten Luftfeder 101 an einem unteren Deckel 107 und/oder dem Drosselorgan 108 ab und hat eine zusätzliche Federungs- und Dämpfüngswirkung zur Folge. Die Abstützung der Zusatzfeder 103 auf dem Drosselorgan 108 kann eine teilweise oder vollständige Abdeckung und damit Schließung der Durchgangsbohrungen oder des Rückschlagventiles des Drosselorgans 108 zur Folge haben und somit die Dämpfung der Federungs- und Dämpfungsvorrichtung in zum Beispiel progressiver Weise verändern.

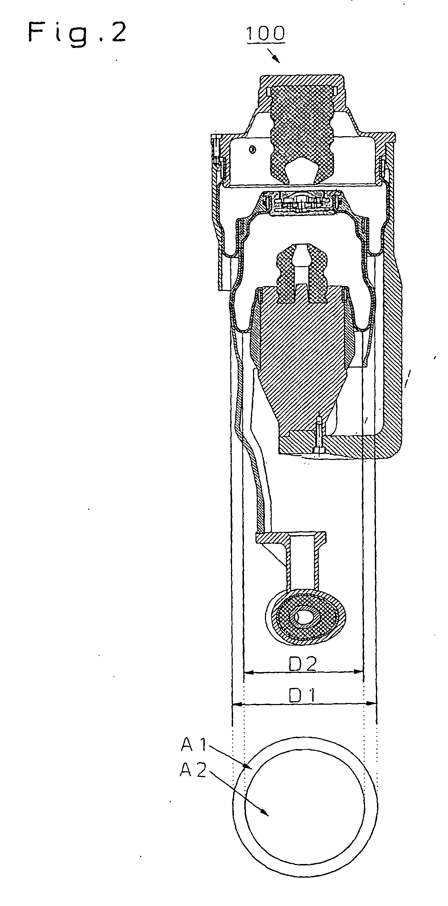

Eine obere Glocke 118 ist an dem Deckel 104 mit einer oder mehreren Schrauben 136 befestigt. Die Verbindung kann aber auch geschweisst oder gepresst oder mit einer anderen üblichen Verbindungstechnik hergestellt werden. Das untere Ende des oberen Rollbalges 116 der ersten Luftfeder 101 ist unter Ausbildung einer Abrollfalte über einen Klemmring 114 dicht mit einem Deckel 107 und/oder einer unteren Glocke 126 verbunden. Die Glocke 126 ist in ihrem unteren, einseitig verlängerten Bereich mit einem Befestigungselement 132 verbunden. Das Befestigungselement 132 in Fig.1 und Fig.2 ist als Befestigungsauge ausgebildet. Es kann aber auch jede andere bekannte Ausführung eines Befestigungselementes benutzt werden. Die Verbindung des Deckels 107 oder der unteren Glocke 126 mit dem Befestigungselement 132 kann mit einem hakenförmigen Steg oder zwei symmetrisch angeordneten Stegen oder einer anderen üblichen Verbindungstechnik hergestellt werden. Die äußere Formgebung der unteren Glocke 126 gibt die Abrollkontur des oberen Rollbalges 116 der ersten Luftfeder 101 und die innere Formgebung, unabhängig von der äußeren Formgebung, gibt die Außenführungskontur des unteren Rollbalges 124 der zweiten Luftfeder 102 vor.

Ein Deckel 107, welcher das Drosselorgan 108 aufnimmt, ist im oberen Bereich der unteren Glocke 126 befestigt. An dem Deckel 107 ist über einen Klemmring 112 das obere Ende des unteren Rollbalges 124 der zweiten Luftfeder 102 dicht verbunden. Die Verbindung zwischen dem Klemmring 112 und der Glocke 126 wird durch einen zwischen den genannten Bauteilen liegenden O-Ring 110 dicht abgeschlossen. Das untere Ende des unteren Rollbalges 124 der zweiten Luftfeder 102 ist unter Ausbildung einer Abrollfalte über einen Klemmring 122 dicht mit einem Abrollkolben 128 verbunden. Der Abrollkolben 128 enthält eine Zusatzfeder 120 und ist zum Beispiel an einem einseitig verlängerten Bereich der oberen Glocke 118 und/oder des oberen Deckels 104 über eine oder mehrere Schrauben 130 befestigt. Die Verbindung kann auch geschweisst oder gepresst oder mit einer anderen üblichen Verbindungstechnik erzeugt werden. Die Verbindung des Deckels 104 und/oder der oberen Glocke 118 mit dem Abrollkolben 128 kann mit einem hakenförmigen Steg oder zwei oder mehr symmetrisch oder unsymmetrisch angeordneten Stegen oder einer anderen üblichen Verbindungstechnik hergestellt werden. Die Zusatzfeder 120 stützt sich bei fast vollständiger Einfederung der zweiten Luftfeder 102 an dem unteren Deckel 107 und/oder dem Drosselorgan 108 ab und hat eine zusätzliche Federungs- und Dämpfungswirkung zur Folge. Die Abstützung der Zusatzfeder 120 auf dem Drosselorgan 108 kann eine teilweise oder vollständige Abdeckung und damit Schließung der Durchgangsbohrungen oder des Rückschlagventiles des Drosselorgans 108 zur Folge haben und somit die Dämpfung der Federungs- und Dämpfungsvorrichtung 100 in zum Beispiel progressiver Weise verändern.

Eine Abstimmschale 127 aus Kunststoff, Gummi oder Metall, welche die Abrollkontur des unteren Rollbalges 124 der zweiten Luftfeder 101 vorgibt, ist auf dem Abrollkolben 128 aufgepresst, geklemmt oder geklebt. Die Luftfeder 101 gegenüber der Luftfeder 102 bzw. die obere Glocke 118 gegenüber der unteren Glocke 126 bzw. der fahrzeugkarosseriefeste Deckel 104 gegenüber dem unteren Befestigungselement 132 sind um einen Winkel α (Alpha) gegeneinander verschwenkbar.

Die Figur 2 zeigt eine Federungs- und Dämpfungsvorrichtung 100 der eingangs genannten Art. Die wirksamen Durchmesser D1, D2 der beiden Luftfedern werden durch eine senkrecht zur vertikalen Achse der Federungs- und Dämpfungsvorrichtung an die untere Abrollfalte anliegende Tangente gebildet. Die wirksame Fläche A1 der ersten Luftfeder ergibt sich aus dem wirksamen Durchmesser D1 dieser und die wirksame Fläche A2 der zweiten Luftfeder ergibt sich aus dem wirksamen Durchmesser D2 dieser. Vorzugsweise ist die Differenzfläche der wirksamen Flächen A1 und A2 klein.

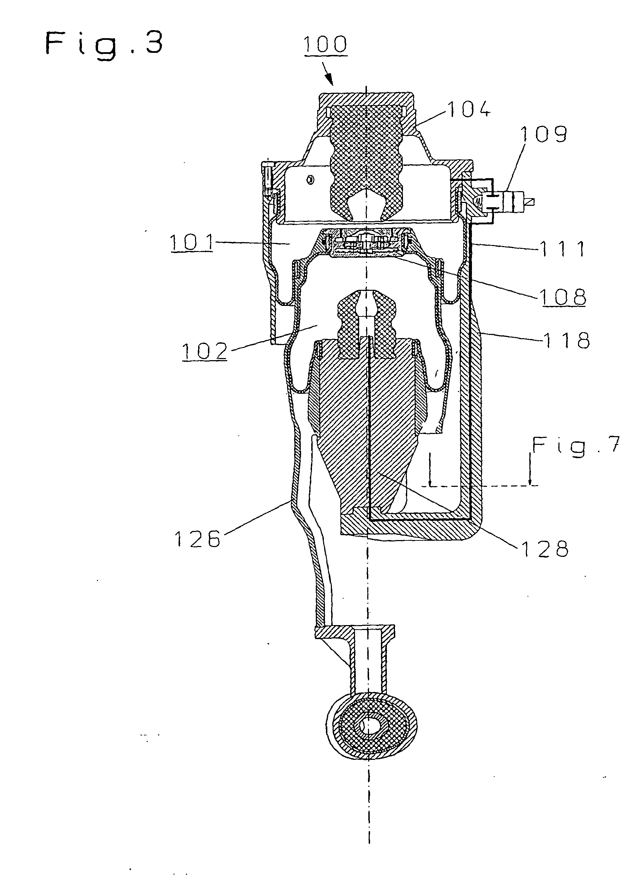

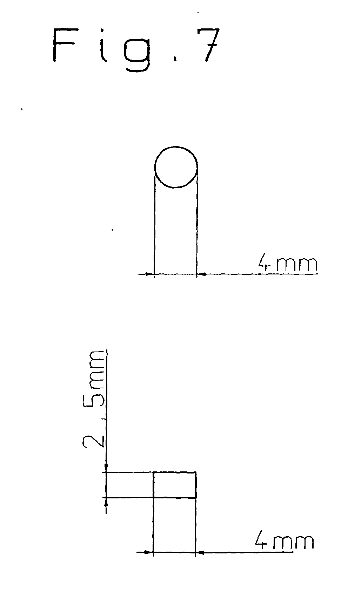

Die Figur 3 zeigt eine Federungs- und Dämpfungsvorrichtung 100 der eingangs genannten Art. Eine Verbindungsleitung 111 zwischen den beiden Luftfedern 101 und 102 ist außerhalb der beiden Luftfedern 101, 102 an bzw. in der oberen Glocke 118 und in dem unteren Abrollkolben 128, sowie parallel zu dem Drosselorgan 108, welches in dem oberen Bereich der unteren Glocke 126 befestigt ist, angeordnet. Das Drosselorgan 108 weist einen nicht gezeigten Drosselquerschnitt von ca. 0,8 mm² auf, so dass eine optimale Dämpfung der Fahrzeugaufbaueigenfrequenz von ca. 1 Hz erzielt wird. Die Länge der Verbindungsleitung 111 entspricht mehr als dem fünffachen Wert des in Fig. 7 dargestellten Querschnitts der Verbindungsleitung 111. Eine Schalteinheit 109 ist im Bereich des Deckels 104 fest mit der oberen Glocke 108 verbunden und kann die Verbindungsleitung 111 in einer ersten Schaltstellung trennen (wie dargestellt) oder in einer zweiten Schaltstellung durchschalten. Die Schalteinheit 109 ist in diesem Ausführungsbeispiel als ein elektrisch betätigbares 2/2-Wegeventil dargestellt. Es können aber alle anderen gebräuchlichen Betätigungsmittel als Schalteinheit 109 eingesetzt werden.

Im Bereich der Schalteinheit 109 ist die Verbindungsleitung 111 mittels eines Standardpneumatikschlauches mit entsprechenden Standard-Verbindungselementen zu der oberen Glocke 108 und der Schalteinheit 109 außerhalb der oberen Glocke 108 angeordnet. Ansonsten wird die Verbindungsleitung 111 vollständig innerhalb des Deckels 104, der oberen Glocke 108 und des unteren Abrollkolbens 128 durch Bohrungen, Gußkanäle oder dgl. dargestellt, so dass die Verbindungsleitung vor Beschädigungen von außen geschützt ist. Es ist aber auch möglich die Verbindungsleitung ausschließlich aus einer Standard-Pneumatikleitung mit entsprechenden Standard-Verbindungselementen herzustellen, so dass keine aufwendigen tiefen Bohrungen oder lange, schmale Gußkanäle oder dgl. gefertigt werden müssen.

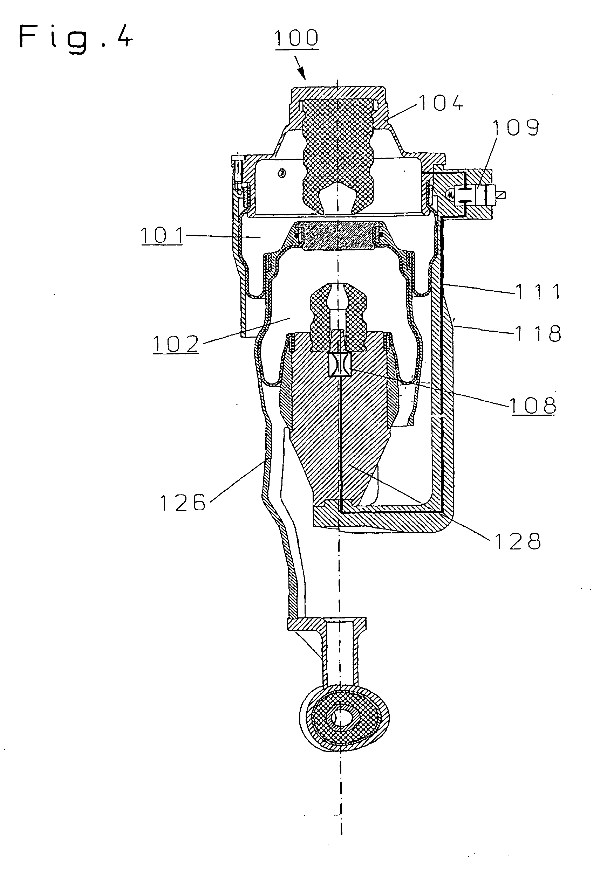

Die Abdichtung der Verbindungsleitung 111 zwischen den einzelnen Bauteilen Deckel 104, obere Glocke 108 und/oder unterer Abrollkolben 128 kann beispielsweise in Form von Zapfen-Bohrung-Press- oder Klebeverbindungen oder dgl. hergestellt werden. Oder es wird ein Dichtring oder eine Flachdichtung zwischen den entsprechenden Bauteilen angeordnet. Eine weitere Möglichkeit die Verbindungsleitung 111 herzustellen besteht darin, dass in die entsprechenden Bauteile Bohrungen von außen eingebracht und durch herkömmliche Verschlusstechnik, wie zum Beispiel Kugeln oder dgl., nach außen abgedichtet und verschlossen werden. Die Verbindungsleitung 111 kann, wie in Fig. 4 gezeigt, vollständig innerhalb des Deckels 104, der oberen Glocke 108 und des unteren Abrollkolbens 128 plaziert werden.

Die Figur 4 zeigt eine Federungs- und Dämpfungsvorrichtung 100 der eingangs genannten Art und unterscheidet sich von der Figur 3 derart, dass das Drosselorgan 108 mit der Verbindungsleitung 111 in Reihe geschaltet ist. Das Drosselorgan 108 ist in dem unteren Abrollkolben 128 an dem einen Ende der Verbindungsleitung 111 der beiden Luftfedern 101, 102 angeordnet. Die Verbindungsleitung 111 wird in diesem Ausführungsbeispiel (wie auch in Fig.3) außerhalb der beiden Luftfedern 101, 102 geführt. Es ist aber auch möglich, dass die Verbindungsleitung 111 an oder in dem oberen Bereich der unteren Glocke 126 und in Reihe zu dem Drosselorgan 108 angeordnet ist.

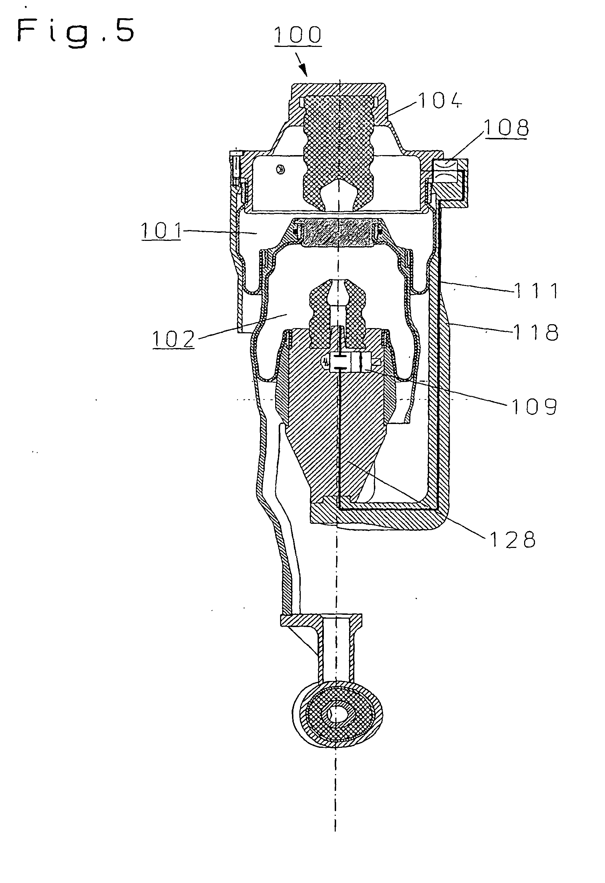

Die Figur 5 zeigt eine Federungs- und Dämpfungsvorrichtung 100 der eingangs genannten Art und unterscheidet sich von der Figur 4 derart, dass das Drosselorgan 108 an oder in der oberen Glocke 118 bzw. dem Deckel 104 an dem einen Ende der Verbindungsleitung 111 und die Schalteinheit 109 in dem unteren Abrollkolben 128 an dem anderen Ende der Verbindungsleitung 111 angeordnet ist.

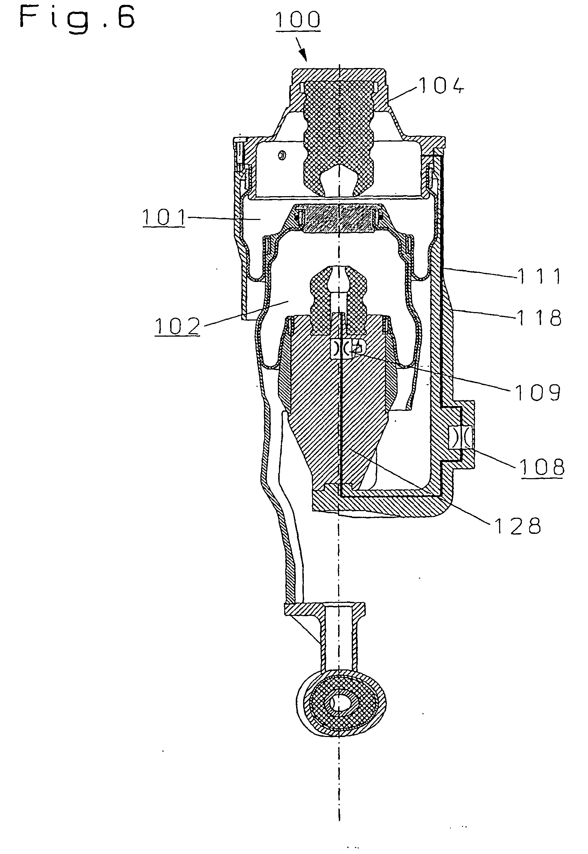

Die Figur 6 zeigt eine Federungs- und Dämpfungsvorrichtung 100 der eingangs genannten Art und unterscheidet sich von der Figur 5 derart, dass das Drosselorgan 108 an bzw. in der oberen Glocke 118 innerhalb der Verbindungsleitung 111 vorzugsweise in der Mitte der Verbindungsleitung 111 angeordnet ist. Die Schalteinheit 109 ist in dem unteren Abrollkolben 128 an einem Ende der Verbindungsleitung 111 plaziert. In diesem Ausführungsbesipiel ist die Schalteinheit 109 als ein elektrisch betätigbares Proportionalventil ausgeführt. Es können aber auch alle anderen herkömmlichen, zum Beispiel pneumatische oder hydraulische oder dgl., Ventile, welche stufenlos regelbar sind, als Schalteinheit 109 eingesetzt werden.

Die Figur 7 zeigt die Querschnittfläche der Verbindungsleitung 111. Dieser kann, wie gezeigt, kreisrund oder rechteckig sein. Die Querschnittfläche weist eine Mindestfläche von mehr als 10 mm² auf, so dass der Durchmesser eines Kreisquerschnitts größer als 4 mm ist. Für eine Rechteckquerschnittfläche von mindestens 10 mm² sind beispielhaft Seitenlängen von mindestens 2,5 mm bzw. mindestens 4 mm angegeben. Die Seitenlängen können beliebig gewählt werden. Ebenso ist jede beliebige Form einer Querschnittfläche, zum Beispiel auch eine elliptische, denkbar, wenn die Mindestquerschnittfläche 10 mm² beträgt.

### Bezugszeichenliste

### (ist Teil der Beschreibung)

- 100: Federungs- und/oder Dämpfungsvorrichtung
- 101: Luftfeder
- 102: Luftfeder
- 103: Zusatzfeder
- 104: Deckel
- 106: Klemmring
- 107: Deckel
- 108: Drosselorgan
- 109: Schalteinheit
- 110: O-Ring
- 111: Verbindungsleitung (zwischen den beiden Luftfedern 101 und 102)
- 112: Klemmring
- 114: Klemmring
- 116: Oberer Rollbalg
- 118: Glocke
- 120: Zusatzfeder
- 122: Klemmring
- 124: Unterer Rollbalg
- 126: Glocke
- 127: Abstimmschale
- 128: Unterer Abrollkolben
- 130: Schraube
- 132: Befestigungselement
- 134: Luftanschluss
- 136: Schraube
- α: Winkel (Alpha)
- D1: Wirksamer Durchmesser oberer Rollbalg
- D2: Wirksamer Durchmesser unterer Rollbalg
- A1: Wirksame Fläche oberer Rollbalg
- A2: Wirksame Fläche unterer Rollbalg

## Patentansprüche

1. Pneumatische Federungs- und Dämpfungsvorrichtung (100) für Fahrzeuge, enthaltend mindestens zwei mit Druckgas gefüllte, über einen Luftanschluss (134) an eine Druckgasquelle anschließbare, hermetisch abgeschlossene und jeweils in ihrem Volumen veränderbare Luftfedern (101, 102), welche jeweils eine von einem Roll- oder Faltenbalg gebildete bewegliche Wand (116, 124) enthalten und jeweils auf einer Abrollkontur abrollen und über ein in zwei Richtungen durchströmbares Drosselorgan (108) in Verbindung stehen, und wobei die Luftfedern (101, 102) übereinander angeordnet sind, und die Abrollkontur der ersten Luftfeder (101) durch die zweite Luftfeder (102) derart vorgegeben wird, dass die erste Luftfeder (101) über der zweiten Luftfeder (102) abrollt, und wobei ein oberer Deckel (104) der ersten Luftfeder (101) über ein Verbindungselement mit einem unteren Abrollkolben (128) der zweiten Luftfeder (102) in Verbindung steht, und ein Deckel (107) der zweiten Luftfeder (102) mit einem Befestigungselement (132) in Verbindung steht, wobei das Verbindungselement des oberen Deckels (104) der ersten Luftfeder (101) mit dem Abrollkolben (128) der zweiten Luftfeder (102) außerhalb der beiden Luftfedern (101, 102) verläuft, **dadurch gekennzeichnet, dass** eine untere Glocke (126) vorhanden ist, welche eine Außenführungskontur des unteren Rollbalges (124) der zweiten Luftfeder (102) und die Abrollkontur des oberen Rollbalges (116) der ersten Luftfeder (101) bildet.

2. Vorrichtung nach Anspruch 1, **dadurch gekennzeichnet, dass** die Federungs- und Dämpfungsvorrichtung im oberen Bereich karosseriefest und im unteren Bereich an einer Radaufhängung befestigbar ist.

3. Vorrichtung nach Anspruch 1 oder Anspruch 2, **dadurch gekennzeichnet, dass** die untere Glocke (126) mit dem Befestigungselement (132) in Verbindung steht.

4. Vorrichtung nach Anspruch 1, Anspruch 2 oder Anspruch 3, **dadurch gekennzeichnet, dass** eine obere Glocke (118) eine Außenführungskontur des oberen Rollbalges (116) der ersten Luftfeder (101) darstellt.

5. Vorrichtung nach Anspruch 4, **dadurch gekennzeichnet, dass** ein unterer Abrollkolben (128) der zweiten Luftfeder (102) mit der oberen Glocke (118) in Verbindung steht.

6. Vorrichtung nach Anspruch 4 oder Anspruch 5, **dadurch gekennzeichnet, dass** der obere Deckel (104) der ersten Luftfeder (101) und die obere Glocke (118) einteilig ausgeführt sind.

7. Vorrichtung nach einem der vorherigen Ansprüche, **dadurch gekennzeichnet, dass** die Differenzfläche der Abrollkonturen der beiden Rollbälge (116, 124) als wirksame Fläche klein ist.

8. Vorrichtung nach einem der vorherigen Ansprüche, **dadurch gekennzeichnet, dass** der untere Abrollkolben (128) zweiteilig ausgeführt ist und eine Abstimmschale (127) zur Ausbildung der Abrollkontur des unteren Rollbalges (124) enthält.

9. Vorrichtung nach einem der vorherigen Ansprüche, **dadurch gekennzeichnet, dass** die erste Luftfeder (101) gegenüber der zweiten Luftfeder (102) schwenkbar ist.

10. Vorrichtung nach einem der vorherigen Ansprüche, **dadurch gekennzeichnet, dass** die Rollbälge (116, 124) der beiden Luftfedern (101, 102) einstückig, insbesondere aus einem Schlauchrollbalg, ausgeführt sind.

11. Vorrichtung nach einem der vorherigen Ansprüche, **dadurch gekennzeichnet, dass** ein Drosselquerschnitt des Drosselorgans (108) hinsichtlich einer optimalen Dämpfung der Fahrzeugaufbaueigenfrequenz vorzugsweise im Bereich von 0,2 Hz bis 4 Hz gewählt wird.

12. Vorrichtung nach einem der vorherigen Ansprüche, **dadurch gekennzeichnet, dass** zwischen den beiden Luftfedern (101, 102) eine Verbindungsleitung (111) vorhanden ist.

13. Vorrichtung nach Anspruch 12, **dadurch gekennzeichnet, dass** das Drosselorgan (108) und die Verbindungsleitung (111) zwischen den beiden Luftfedern (101, 102) parallel geschaltet sind.

14. Vorrichtung nach Anspruch 12, **dadurch gekennzeichnet, dass** das Drosselorgan (108) und die Verbindungsleitung (111) zwischen den beiden Luftfedern (101, 102) in Reihe geschaltet sind.

15. Vorrichtung nach Anspruch 14, **dadurch gekennzeichnet, dass** das Drosselorgan (108) an einem Ende der Verbindungsleitung (111) der beiden Luftfedern (101, 102) entweder an oder in dem oberen Deckel (104) bzw. der oberen Glocke (118) oder an oder in dem unteren Abrollkolben (128) angeordnet ist.

16. Vorrichtung nach Anspruch 14, **dadurch gekennzeichnet, dass** das Drosselorgan (108) innerhalb - vorzugsweise in der Mitte - der Verbindungsleitung (111) der beiden Luftfedern (101, 102) angeordnet ist.

17. Vorrichtung nach Anspruch 12, **dadurch gekennzeichnet, dass** die Verbindungsleitung (111) zwischen den beiden Luftfedern (101, 102) außerhalb der beiden Luftfedern (101, 102) verläuft.

18. Vorrichtung nach Anspruch 12, **dadurch gekennzeichnet, dass** die Verbindungsleitung (111) zwischen den beiden Luftfedern (101, 102) an oder in der oberen Glocke (118) und/oder an oder in dem unteren Abrollkolben (128) verläuft.

19. Vorrichtung nach Anspruch 12, **dadurch gekennzeichnet, dass** die Verbindungsleitung (111) zwischen den beiden Luftfedern (101, 102) mit einer Schalteinheit (109) schaltbar ist, wobei vorzugsweise ein elektrisch betätigbares Magnetventil verwendet wird.

20. Vorrichtung nach Anspruch 19, **dadurch gekennzeichnet, dass** die Verbindungsleitung (111) zwischen den beiden Luftfedern (101, 102) mit einem - vorzugsweise elektrisch betätigbaren - Proportionalventil (109) - vorzugsweise stufenlos - regelbar ist.

21. Vorrichtung nach Anspruch 19 oder Anspruch 20, **dadurch gekennzeichnet, dass** die Schalteinheit (109) der Verbindungsleitung (111) zwischen den beiden Luftfedern (101, 102) an oder in der oberen Glocke (118) angeordnet ist.

22. Vorrichtung nach Anspruch 19 oder Anspruch 20, **dadurch gekennzeichnet, dass** die Schalteinheit (109) der Verbindungsleitung (111) zwischen den beiden Luftfedern (101, 102) an oder in dem unteren Abrollkolben (128) angeordnet ist.

23. Vorrichtung nach Anspruch 12, **dadurch gekennzeichnet, dass** die Verbindungsleitung (111) eine im Vergleich zum Drosselquerschnitt des Drosselorgans (108) große Querschnittfläche von vorzugsweise mehr als 10 mm² aufweist.

24. Vorrichtung nach Anspruch 12, **dadurch gekennzeichnet, dass** die Länge der Verbindungsleitung (111) mindestens dem fünffachen Wert der Querschnittfläche der Verbindungsleitung (111) entspricht.

25. Vorrichtung nach Anspruch 12, **dadurch gekennzeichnet, dass** die Querschnittfläche und die Länge der Verbindungsleitung (111) zwischen den beiden Luftfedern (101, 102) so gewählt werden, dass eine gute Dämpfung der Achsfrequenzen - vorzugsweise im Bereich von 10 Hz bis 40 Hz - erzielt wird.

26. Vorrichtung nach Anspruch 12 , **dadurch gekennzeichnet, dass** die Querschnittfläche der Verbindungsleitung (111) zwischen den beiden Luftfedern (101, 102) im Bereich von 10 mm² bis 500 mm² und die Länge der Verbindungsleitung zwischen den beiden Luftfedern (101, 102) im Bereich von 50 mm bis 1000 mm gewählt wird.

## Claims

1. Pneumatic suspension and damping apparatus (100) for vehicles, comprising at least two air springs (101, 102) which are filled with pressurized gas, can be connected to a pressurized gas source via an air connection (134), are hermetically closed, can have their volumes changed in each case, comprise in each case a movable wall (116, 124) which is formed by a rolling or folding bellows, in each case roll on a rolling contour and are connected via a throttling member (108) through which flow can pass in two directions, the air springs (101, 102) being arranged above one another and the rolling contour of the first air spring (101) being predetermined by the second air spring (102) in such a way that the first air spring (101) rolls over the second air spring (102), and an upper cover (104) of the first air spring (101) being connected via a connecting element to a lower rolling piston (128) of the second air spring (102), and a cover (107) of the second air spring (102) being connected to a fastening element (132), the connecting element of the upper cover (104) of the first air spring (101) to the rolling piston (128) of the second air spring (102) extending outside the two air springs (101, 102), **characterized in that** there is a lower bell (126) which forms an outer guide contour of the lower rolling bellows (124) of the second air spring (102) and the rolling contour of the upper rolling bellows (116) of the first air spring (101).

2. Apparatus according to Claim 1, **characterized in that** the suspension and damping apparatus can be fastened fixedly to the vehicle body in the upper region and to a wheel suspension system in the lower region.

3. Apparatus according to Claim 1 or 2, **characterized in that** the lower bell (126) is connected to the fastening element (132).

4. Apparatus according to Claim 1, Claim 2 or Claim 3, **characterized in that** an upper bell (118) is an outer guide contour of the upper rolling bellows (116) of the first air spring (101).

5. Apparatus according to Claim 4, **characterized in that** a lower rolling piston (128) of the second air spring (102) is connected to the upper bell (118).

6. Apparatus according to Claim 4 or Claim 5, **characterized in that** the upper cover (104) of the first air spring (101) and the upper bell (118) are of one-part configuration.

7. Apparatus according to one of the preceding claims, **characterized in that** the differential surface of the rolling contours of the two rolling bellows (116, 124) as an active surface is small.

8. Apparatus according to one of the preceding claims, **characterized in that** the lower rolling piston (128) is of two-part configuration and comprises an adaptation shell (127) for forming the rolling contour of the lower rolling bellows (124).

9. Apparatus according to one of the preceding claims, **characterized in that** the first air spring (101) can be pivoted with respect to the second air spring (102).

10. Apparatus according to one of the preceding claims, **characterized in that** the rolling bellows (116, 124) of the two air springs (101, 102) are of one-part configuration, in particular from a tube-shaped rolling bellows.

11. Apparatus according to one of the preceding claims, **characterized in that** a throttling cross section of the throttling member (108) is selected with regard to optimum damping of the vehicle-body resonant frequency, preferably in the range from 0.2 Hz to 4 Hz.

12. Apparatus according to one of the preceding claims, **characterized in that** there is a connecting line (111) between the two air springs (101, 102).

13. Apparatus according to Claim 12, **characterized in that** the throttling member (108) and the connecting line (111) between the two air springs (101, 102) are connected in parallel.

14. Apparatus according to Claim 12, **characterized in that** the throttling member (108) and the connecting line (111) between the two air springs (101, 102) are connected in series.

15. Apparatus according to Claim 14, **characterized in that**, at one end of the connecting line (111) of the two air springs (101, 102), the throttling member (108) is arranged either at or in the upper cover (104) or the upper bell (118) or at or in the lower rolling piston (128).

16. Apparatus according to Claim 14, **characterized in that** the throttling member (108) is arranged within, preferably in the centre of, the connecting line (111) of the two air springs (101, 102).

17. Apparatus according to Claim 12, **characterized in that** the connecting line (111) between the two air springs (101, 102) runs outside the two air springs (101, 102).

18. Apparatus according to Claim 12, **characterized in that** the connecting line (111) between the two air springs (101, 102) runs on or in the upper bell (118) and/or on or in the lower rolling piston (128).

19. Apparatus according to Claim 12, **characterized in that** the connecting line (111) between the two air springs (101, 102) can be switched with a switching unit (109), an electrically actuable solenoid valve preferably being used.

20. Apparatus according to Claim 19, **characterized in that** the connecting line (111) between the two air springs (101, 102) can be regulated, preferably in an infinitely variable manner, with a preferably electrically actuable proportional valve (109).

21. Apparatus according to Claim 19 or Claim 20, **characterized in that** the switching unit (109) of the connecting line (111) between the two air springs (101, 102) is arranged on or in the upper bell (118).

22. Apparatus according to Claim 19 or Claim 20, **characterized in that** the switching unit (109) of the connecting line (111) between the two air springs (101, 102) is arranged on or in the lower rolling piston (128).

23. Apparatus according to Claim 12, **characterized in that** the connecting line (111) has a cross-sectional area of preferably more than 10 mm², which is large in comparison with the throttling cross section of the throttling member (108).

24. Apparatus according to Claim 12, **characterized in that** the length of the connecting line (111) corresponds to at least five times the value of the cross-sectional area of the connecting line (111).

25. Apparatus according to Claim 12, **characterized in that** the cross-sectional area and the length of the connecting line (111) between the two air springs (101, 102) are selected in such a way that satisfactory damping of the axle frequencies is achieved, preferably in the range from 10 Hz to 40 Hz.

26. Apparatus according to Claim 12, **characterized in that** the cross-sectional area of the connecting line (111) between the two air springs (101, 102) is selected to be in the range from 10 mm² to 500 mm², and the length of the connecting line between the two air springs (101, 102) is selected to be in the range from 50 mm to 1000 mm.

## Revendications

1. Dispositif pneumatique (100) de suspension élastique et d'amortissement pour véhicules, qui présente au moins deux coussins d'air (101, 102) qui sont remplis de gaz comprimé, qui peuvent être raccordés à une source de gaz comprimé par l'intermédiaire d'un raccordement d'air (134), qui sont hermétiquement fermés, dont le volume est variable, qui présentent chacun une paroi mobile (116, 124) formée par un soufflet de suspension ou pliable qui se déroule sur un contour de suspension et qui est relié par l'intermédiaire d'un organe d'étranglement (108) qui peut être traversé dans les deux sens, les coussins d'air (101, 102) étant agencés l'un au-dessus de l'autre et le contour de suspension du premier coussin d'air (101) étant déterminé par le deuxième coussin d'air (102) de telle sorte que le premier coussin d'air (101) soit suspendu au-dessus du deuxième coussin d'air (102), un couvercle supérieur (104) du premier coussin d'air (101) étant relié à un piston inférieur de suspension (128) du deuxième coussin d'air (102) par l'intermédiaire d'un élément de liaison et un couvercle (107) du deuxième coussin d'air (102) étant relié à un élément de fixation (132), l'élément de liaison entre le couvercle supérieur (104) du premier coussin d'air (101) et le piston de suspension (128) du deuxième coussin d'air (102) s'étendant en dehors des deux coussins d'air (101, 102), **caractérisé en ce qu'**il présente une cloche inférieure (126) qui forme un contour extérieur de guidage du soufflet de suspension inférieur (124) du deuxième coussin d'air (102) et le contour de suspension du soufflet de suspension supérieur (116) du premier coussin d'air (101).

2. Dispositif selon la revendication 1, **caractérisé en ce que** sa partie supérieure peut être fixée à la carrosserie et sa partie inférieure à une suspension de roue.

3. Dispositif selon les revendications 1 ou 2, **caractérisé en ce que** la cloche inférieure (126) est reliée à l'élément de fixation (132).

4. Dispositif selon les revendications 1, 2 ou 3, **caractérisé en ce qu'**une cloche supérieure (118) forme un contour extérieur de guidage du soufflet de suspension supérieur (116) du premier coussin d'air (101).

5. Dispositif selon la revendication 4, **caractérisé en ce qu'**un piston inférieur de suspension (128) du deuxième coussin d'air (102) est relié à la cloche supérieure (118).

6. Dispositif selon les revendications 4 ou 5, **caractérisé en ce que** le couvercle supérieur (104) du premier coussin d'air (101) et la cloche supérieure (118) ne forment qu'une seule pièce.

7. Dispositif selon l'une des revendications précédentes, **caractérisé en ce que** la différence de surface entre les contours de suspension des deux soufflets de suspension (116, 124) qui sert de surface efficace est petite.

8. Dispositif selon l'une des revendications précédentes, **caractérisé en ce que** le piston inférieur de suspension (128) est constitué de deux pièces et présente une enveloppe d'adaptation (127) qui forme le contour de suspension du soufflet de suspension inférieur (124).

9. Dispositif selon l'une des revendications précédentes, **caractérisé en ce que** le premier coussin d'air (101) peut pivoter par rapport au deuxième coussin d'air (102).

10. Dispositif selon l'une des revendications précédentes, **caractérisé en ce que** les soufflets de suspension (116, 124) des deux coussins d'air (101, 102) sont constitués d'une pièce et en particulier d'un soufflet de suspension flexible.

11. Dispositif selon l'une des revendications précédentes, **caractérisé en ce que** l'on sélectionne une section transversale d'étranglement de l'organe d'étranglement (108) de manière à obtenir un amortissement optimal de la fréquence propre de la structure du véhicule de préférence dans la plage comprise entre 0,2 Hz et 4 Hz.

12. Dispositif selon l'une des revendications précédentes, **caractérisé en ce qu'**un conduit de liaison (111) est prévu entre les deux coussins d'air (101, 102).

13. Dispositif selon la revendication 12, **caractérisé en ce que** l'organe d'étranglement (108) et le conduit de liaison (111) sont montés parallèlement entre les deux coussins d'air (101, 102).

14. Dispositif selon la revendication 12, **caractérisé en ce que** l'organe d'étranglement (108) et le conduit de liaison (111) sont alignés entre les deux coussins d'air (101, 102).

15. Dispositif selon la revendication 14, **caractérisé en ce que** l'organe d'étranglement (108) est agencé sur une extrémité du conduit de liaison (111) des deux coussins d'air (101, 102) et sur ou dans le couvercle supérieur (104) ou la cloche supérieure (118) ou sur ou dans le piston inférieur de suspension (128).

16. Dispositif selon la revendication 14, **caractérisé en ce que** l'organe d'étranglement (108) est agencé dans le conduit de liaison (111) des deux coussins d'air (101, 102) et de préférence au milieu de celui-ci.

17. Dispositif selon la revendication 12, **caractérisé en ce que** le conduit de liaison (111) entre les coussins d'air (101, 102) s'étend en dehors des deux coussins d'air (101, 102).

18. Dispositif selon la revendication 12, **caractérisé en ce que** le conduit de liaison (111) entre les coussins d'air (101, 102) s'étend sur ou dans la cloche supérieure (118) et/ou sur ou dans le piston inférieur de suspension (128).

19. Dispositif selon la revendication 12, **caractérisé en ce que** le conduit de liaison (111) entre les deux coussins d'air (101, 102) peut être commuté au moyen d'une unité de commutation (109), une soupape magnétique apte à être actionnée électriquement étant de préférence utilisée.

20. Dispositif selon la revendication 19, **caractérisé en ce que** le conduit de liaison (111) entre les coussins d'air (101, 102) peut être régulé - de préférence de manière progressive - au moyen d'une soupape proportionnelle (109) que l'on peut de préférence actionner électriquement.

21. Dispositif selon les revendications 19 ou 20, **caractérisé en ce que** l'unité de commutation (109) du conduit de liaison (111) entre les deux coussins d'air (101, 102) est agencée sur ou dans la cloche supérieure (118).

22. Dispositif selon les revendications 19 ou 20, **caractérisé en ce que** l'unité de commutation (109) du conduit de liaison (111) entre les deux coussins d'air (101, 102) est agencée sur ou dans le piston inférieur de suspension (128).

23. Dispositif selon la revendication 12, **caractérisé en ce que** la superficie de la section transversale du conduit de liaison (111) est supérieure à celle de la section transversale d'étranglement de l'organe d'étranglement (108) et est de préférence supérieure à 10 mm².

24. Dispositif selon la revendication 12, **caractérisé en ce que** la longueur du conduit de liaison (111) est au moins égale au quintuple de la superficie de la section transversale de la conduite de liaison (111).

25. Dispositif selon la revendication 12, **caractérisé en ce que** la superficie de la section transversale et la longueur du conduit de liaison (111) entre les deux coussins d'air (101, 102) sont sélectionnées de manière à bien amortir les fréquences axiales, de préférence dans la plage comprise entre 10 Hz et 40 Hz.

26. Dispositif selon la revendication 12, **caractérisé en ce que** la superficie de la section transversale du conduit de liaison (111) entre les deux coussins d'air (101, 102) est sélectionnée dans la plage comprise entre 10 mm² et 500 mm² et la longueur du conduit de liaison entre les deux coussins d'air (101, 102) est sélectionnée dans la plage comprise entre 50 mm et 1 000 mm.
